# EUROPEAN PATENT SPECIFICATION

(11) **EP 0 799 676 B1**
(45) Date of publication and mention of the grant of the patent: **11.04.2001**
(21) Application number: 97500015.9
(22) Date of filing: 22.01.1997
(51) Int. Cl.: B24B 41/04

(54) **Headstock for a grinding machine provided with automatic linear displacement**
Kopfstück von einer Schleifmaschine mit automatischer Linearfortbewegung
Poupée porte-pièces pour une rectifieuse avec déplacement linéaire automatique

(30) Priority: 02.04.1996 ES 9600789
(43) Date of publication of application: 08.10.1997
(73) Proprietor: Danobat, S. Coop, 20870 Elgoibar (Guipuzcoa) (ES)
(72) Inventor: Bastida Chueca, José Luis, 20870 Elgoibar, (Guipuzcoa) (ES)

(56) References cited:
- EP-A- 0 394 209
- DE-A- 3 524 438
- US-A- 3 763 600
- US-A- 4 625 461

## Description

The present invention relates to a grinding machine of horizontal rotating spindle with a headstock, as per the preamble of claim 1. An example of such a machine is disclosed by US 4 625 461 A.

### PRIOR ART

Where items from a single batch are of the same length, a part to be ground is changed by moving the tail-stock shank sufficiently between the tail-stock and headstock supports. To replace a ground item by another of a different length in a single machining series, as often occurs when grinding crankshafts, the headstock is moved manually by a measure which must be checked after the new item has been put in place, and permanent manual force must be applied to make the grinder table to advance. The table displacement may be for example 100 mm and the headstock is of considerable weight. A new item of a different length requires a further table displacement and adjustment of the measure of the displacement, this operation taking up excessive time.

There is the risk that the tail-stock support point will not fit correctly into the tapered housing on the edge of the part so that the shaft is off centre in relation to the rotation axis of the workpiece spindle of the headstock.

Frequent large displacement of the headstock also have the drawback of the play between the sliding surfaces of the headstock and the grinder table, usually a dove-tailed profile, which increases with the wear caused by continuous use.

US-A-4625461 which represents the closest prior art, describes a grinding machine equipped with a CNC unit and having a headstock provided with an automatic linear displacement of variable run, where the grinding table is mobile in relation to the machine bed, and the headstock slides in relation to said table for spacing from the tailstock at a given mesure according to the variable lenght of the workpiece, and both headstock and table have regulations means for their automatic relative displacement, which determine the different position of the headstock relative to the table and to the machine bed, provided with means for locking and realising the relative sliding between them automatically.

In EP-311864, the headstock slide runs along a guide-rail with a ball-bearing surface, fixed by screws to the grinder table.

In DE-3722650, a position sensor generating an electrical signal is associated to a stop on the tail-stock to indicate any error in its movement in relation to a further stop which is movable.

In DE-3524401, a headstock slide has its linear movement on guide-rails in the bed, with rollers bearing high loads and without play in the guides.

### DISCLOSURE OF THE INVENTION

The objects of the present invention are acheived by the machine of Claim 1.

Substitution of workpieces of different lengths in a single machining series means that the headstock must be moved, in controlled manner, over a long and variable run which, is obtained with a first device for regulating the variable run movement governed by the machine CNC where, in the first place, the headstock is secured to the grinder table and moves with it under the drive from the permanent motorised spindle on the machine bed, until the regulating device located at a reference point fixed on the bed stops the run. In the second place, with the headstock secured to the machine bed by the control element, the movement of the headstock in relation to the grinder table is released and now the table, carrying the tail-stock, slides under the control of the CNC to the distance programmed from the headstock.

In a second device for regulating the headstock movement, this is done to substitute parts of only two differing lengths, as often occurs when grinding crankshafts, the displacement run being repetitive and of a pre-set value. This second regulation device is located outside against the headstock housing.

### DESCRIPTION OF THE DRAWINGS

FIG. 1 is a face view of an embodiment of the headstock of a grinder with automatic linear movement, which is the object of the invention, showing the device for controlling the variable-length movement.

FIG.2 is an elevation of the headstock in figure 1, showing the device for controlling the movement between two stops.

FIG.3 is a transversal cross-section of the headstock along III-III in figure 1, showing the means for sliding the headstock in its automatic movement.

FIG.4 is the transversal cross-section of the headstock in figure 3, showing the slide elements in detail.

FIGS. 5 and 6 are respectively elevation and profile views of the device for regulating the movement in figure 2.

### PREFERRED EMBODIMENT OF THE INVENTION

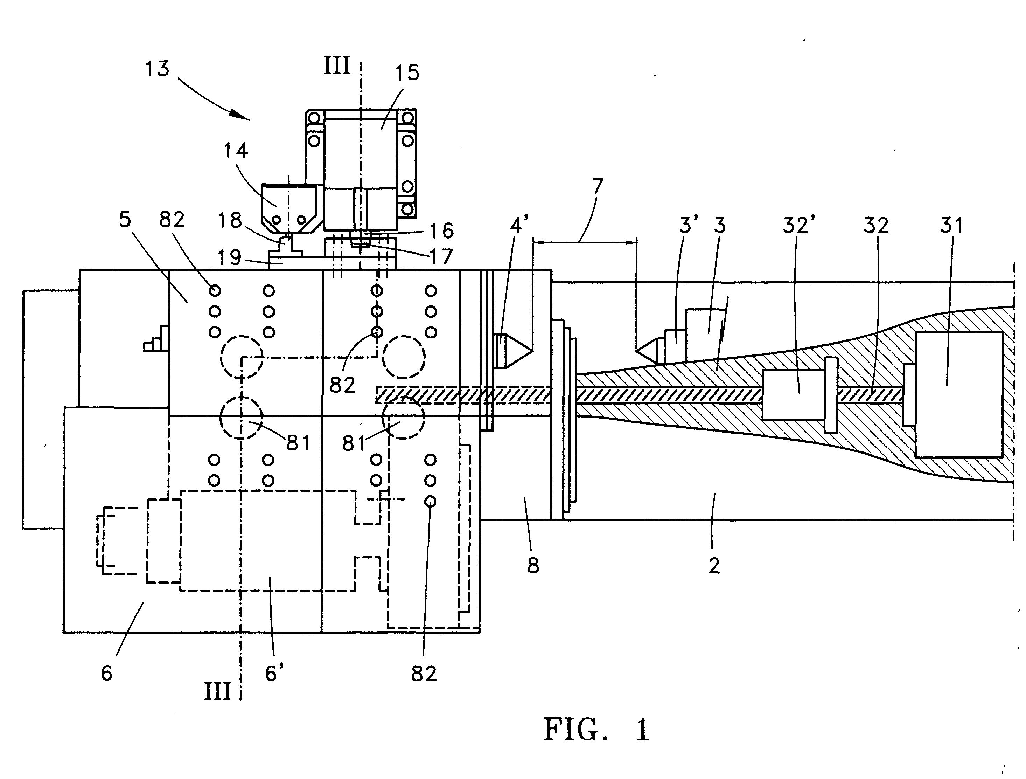

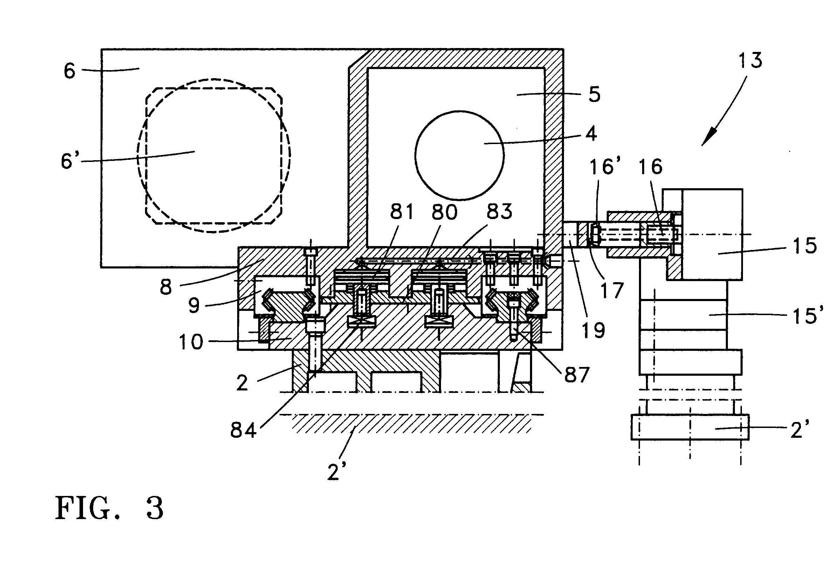

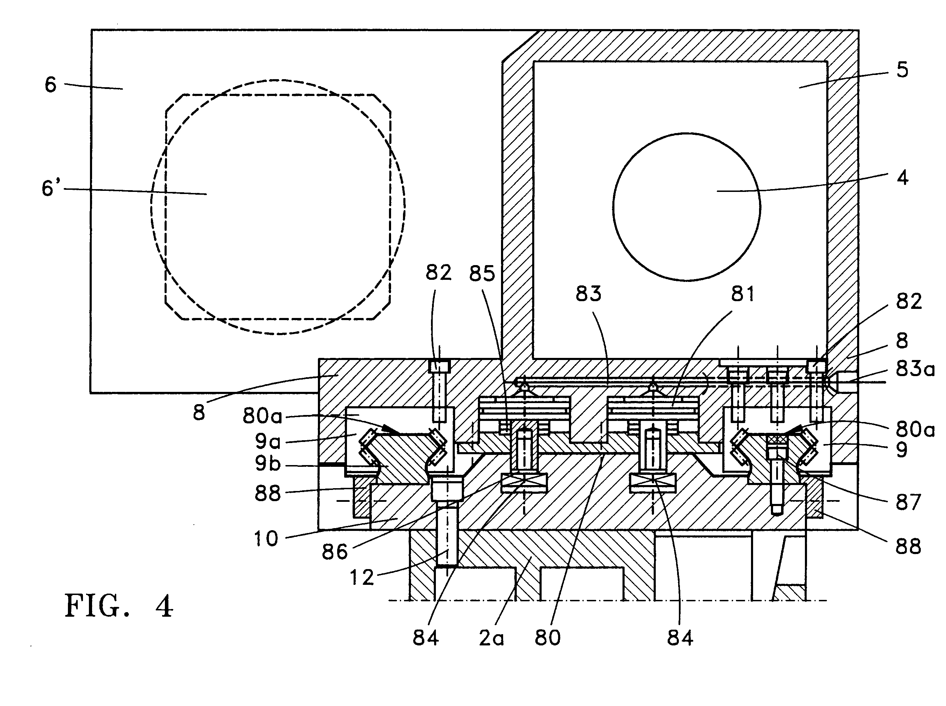

With reference to figures 1, 3 and 4, the grinding machine with a headstock 5,6,8 is shown which is the object of the invention, having a first device 13 for regulating its variable run displacements of a relatively large value, e.g. 100 mm, to obtain a measure 7 between the spindle support 4' and tail-stock support 3', such as that of a 300 mm crankshaft (not shown in drawings). The headstock 5,6,8 with the horizontal drive spindle 4 slides on the grinder table 2, formed externally by the spindle housing 5 and the cabinet 6 housing the rotation servo-motor 6', both at the same height to form a single body supported by the headstock slide 8 which is coupled to two rolling units 9 as shown in figures 3 and 4, inserted on the headstock base plate 10, and the latter fixed to the grinder table 2 by the bolts 12.

The grinder table 2 is mobile and has two longitudinal sectors 2a and 2b of differing profile, the first shown in figures 3 and 4 extending under the entire run of the headstock, while sector 2b of the table, shown in figure 6, of a known dovetail cross-section, extends to the rest of the table toward the tail-stock 3 end. The table 2 is driven by the grinder's internal continuous spindle 32 which is coupled to the table 2 by the shank nut 32', and driven by a servo-motor controlled by the grinder's CNC unit.

The slide 8 and base pate 10 of the headstock are coupled as shown in figure 4 across a broken-profile coupling surface 80, where the running surfaces 80a are formed by the rolling units 9 extending right along the sector of the table 2a, one on each side of the base plate 10, in the form of guide-rails 9b joined by the lengthwise connecting flanges 88 and a number of commercial roller recirculation slides 9a, aligned on each guide-rail 9b and carrying the headstock slide 8, which is fixed to the roller recirculation slides 9a by the bolts 82. The guide-rails 9a are secured to the headstock base-plate in parallel with the bolts 87.

To release the sliding movement of the headstock 5,6,8 relative to the grinder table 2, the headstock slide 8 has two pairs of hydraulic pistons 81 between the guide-rails 9b, driven by a hydraulic circuit 83 with side input 83a on the slide 8. The pistons 81 push the retaining bolts 84, whose square headstocks were restraining the slide 8 against the base plate 10 to stop it from sliding under the force of the disc springs 85. The distance between the coupled surfaces of the slide 8 and the base plate 10 when the slide is free to move is regulated by the shim 86 adjusting the bolt stop 84.

The headstock displacements regulating device 13 shown in figures 1 and 3, comprises the positioning cylinder 15 whose support 15' is fastened to the machine bed 2' and whose rod 16 projects one shortened-cone retaining end 16', the microswitch 14 adjacent and connected to the cylinder 15, the support plate 19 forming part of the hood 5 with a housing 17 for said rod end 16', and a lug 18 belonging to the support plate 19 that presses the microswitch 14. To move the headstock 1 to set a new distance 7 between supports 3' and 4' of the workpiece, the CNC is programmed for a movement of grinder table 2 according to the longitudinal shaft, equal to the difference of length between the new workpiece to be ground and the one it replaces. In an initial movement, the headstock 1 is locked with the square-headstock bolts 84: with the headstock locked, the table 2 is moved in one direction until the microswitch 14 is operated and the headstock is held against the machine bed 2' by the rod 16. This is the headstock reference position for measurement of the length of movement. In the subsequent operations to change the headstock, the movement of the slide 8 is released from the headstock by means of the pistons 81, and the table 2 with the tail-stock 3 moves a distance equalling the difference between the parts' lengths, while the headstock is restrained against the machine bed 2'.

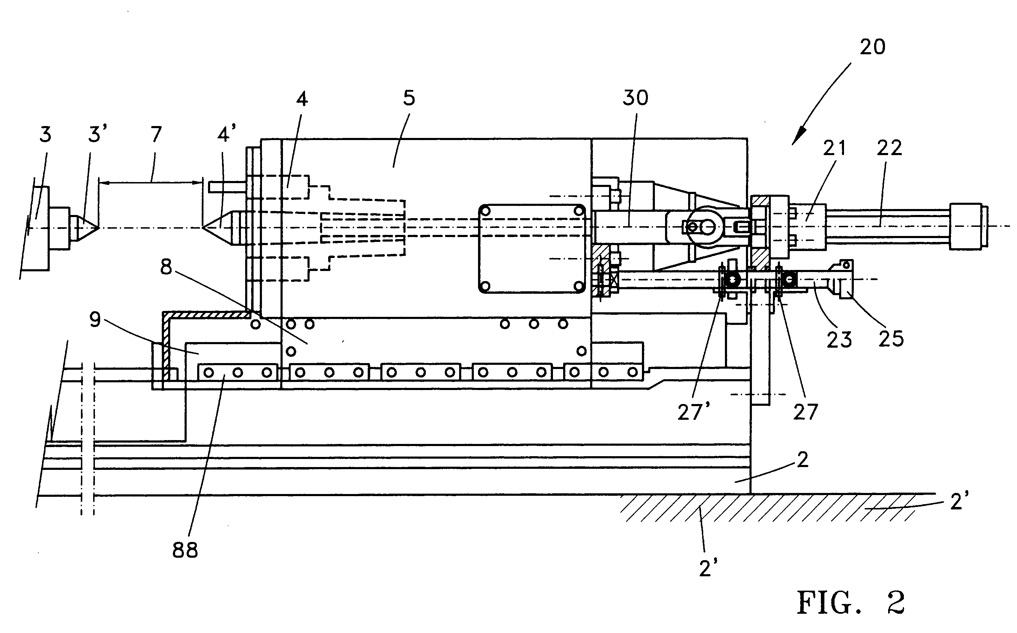

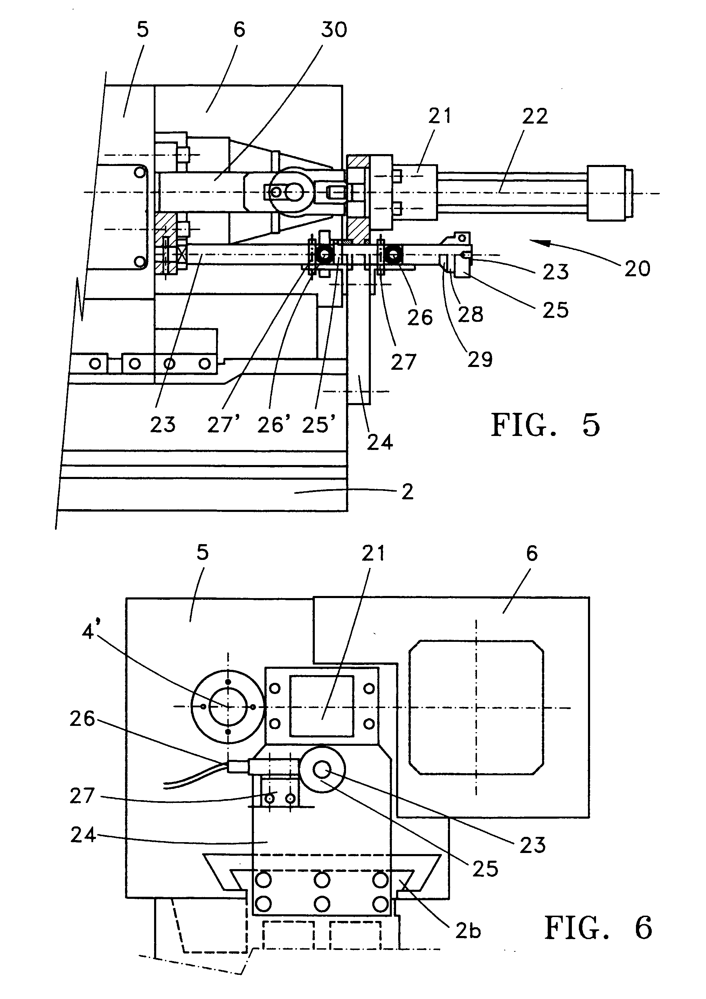

With reference to figures 2, 5 and 6, which show the regulation device 20 for the movement of the headstock 5,6,8 for repeated runs between two stops, the regulating device 20 extends horizontally over the surface of the housing 5 opposite the support 3' for the workpiece, and consists of the cylinder 21 to drive the headstock 1 which is attached to the table 2 by a support plate 24, the piston 22 of the cylinder 21, the tie 23 which is movable with the piston 22, and parallel to it, and which crosses said support 24 and has two mobile stops 25 and 25' each of which is located on one side of the support 24, at an adjustable distance between them to define the repeated run of the headstock. The piston 22 for thrust on the headstock is connected to its housing 5 by a coupling element 30. Each mobile stop 25, 25' ends its run at the associated stops 27 and 27' secured to the support 24, and the two optical position sensors 26 associated with the fixed stops 27, 27' control the operation of the cylinder 21 to guarantee the correct length of movement.

The tie 23 is made with a 10 mm diameter bar, for example, and the mobile stops 25 and 25' with a plate coaxial to the tie 23: a concave-convex washer 28 is secured against said plate with an elastic rubber washer 29 to dampen the impact against the fixed stops 27, 27'.

## Claims

1. Grinding machine of the horizontal rotating spindle (4) type equipped with a CNC unit, and having a headstock (6) provided with linear displacement, for grinding the outsides surfaces of items of different lengths, where the grinder table (2) is mobile in relation to the machine bed (2') and the headstock (1) slides in relation to said table (2) by means of a headstock slide (8) on guide-rails with rollers (9b), for spacing from the tail-stock (3) at a given measure (7) according to the variable length of the workpiece, and both headstock (1) and table (2) have regulation means (13, 20, 21 31, 32) for their automatic relative displacement, characterized in that said automatic displacement is of both variable run and repeated run, by means of two devices (13, 20) for the automatic regulation of each run, that determine the different positions of the headstock relatives to the table (2) and to the machine bed (2'), the first device (13) comprising a running coupling (8,9,10) between the headstock slide (8) and the table (2), provided with means (81,83,84,85) for locking and releasing the sliding of the headstock (6) automatically, and the second device (20) regulating the repeated run comprises a cylinder (21) to impel the headstock (1) attached to the table (2), a tie (23) parallel to the cylinder (21) driven by the piston (22), two mobile stops (25, 25') on said tie (23) distanced according to the length of run, two fixed (27, 27') stops on the table (2) and two position sensors (26, 26') associated with said fixed stops (27, 27').

2. The grinding machine of claim 1 wherein said coupling (8,9,10) between the headstock (1) slide and the table (2) comprises a headstock slide (8) with an internal hydraulic circuit (83), a headstock (1) base-plate (9) secured to the table (2), two rolling units (9) inserted between the slide (8) and the base-plate (10), two pistons (81) housed on the slide (8) and driven by said hydraulic circuit (83) which, to release the slide action, each pull on a square-headstocked lock-bolt (84) securing the base-plate (10) against the slide (8) under the force of a disc spring (85).

3. The grinding machine of claim 1, wherein the device (13) for regulating its variable run comprises a cylinder (15) for positioning the headstock (1) in relation to a reference point on the bedplate (2'), a rod (16) to restrain the headstock (1) against the bedplate (2') and a micro-switch (14) fixed to said cylinder (15), operating the restraining rod (16) after the initial movement of the table (2) and headstock together.

## Patentansprüche

1. Schleifmaschine in der Art einer Schleifspindel (4) mit horizontaler Drehung, ausgestattet mit einer CNC-Einheit, welche einen mit linearer Verschiebung versehenen Kopf (5, 6) zum Schleifen von Aussenflächen von Teilen verschiedener Länge aufweist, wobei der Tisch (2) der Schleifmaschine relativ zum Maschinenbett (2') beweglich ist und der Kopf über einen Kopfschlitten (8) relativ zum Tisch (2) auf Führungsschienen mit Rolleinheiten (9) gleitet, um sich in einem bestimmten Mass (7) in Abhängigkeit von der veränderlichen Länge des Werkstücks zu entfernen, wobei beide, der Kopf (5, 6) und der Tisch (2), Stellmittel (13, 20, 21, 31, 32) für ihre automatische Relativfortbewegung aufweisen, dadurch gekennzeichnet, dass diese automatische Verschiebung auf beiden Strecken veränderlich und wiederholt erfolgt, und zwar mit Hilfe der beiden Vorrichtungen (13, 20) für die automatische Streckeneinstellung, welche die verschiedenen Stellungen des Kopfes gegenüber dem Tisch (2) und dem Maschinenbett (2') bestimmt, und dass die erste Vorrichtung (13) eine Laufkopplung (8, 9, 10) zwischen dem Schlitten (8) des Kopfes und dem Tisch (2) umfasst, die mit Mitteln (81, 83, 84, 85) für die automatische Blockierung und Freigabe der Verschiebung des Kopfes ausgestattet sind, während die zweite Vorrichtung (20) zur Einstellung der Wiederholungsstrecke eine im Tisch (2) verankerte Walze (21) für den Antrieb des Kopfes (5, 6), eine zur Walze (21) parallele und vom Kolben (22) mitgezogene Spannstrebe (23), zwei je nach der Länge der Strecke mit Abstand auf der Spannstrebe (23) befestigte bewegliche Anschläge (25, 25'), zwei am Tisch (2) festsitzende Anschläge (27, 27') und zwei mit diesen festen Anschlägen (27, 27') verbundene Sensoren (26, 26') enthält.

2. Schleifmaschine nach Anspruch 1, wobei die Kopplung (8, 9, 10) zwischen dem Schlitten (8) des Kopfes und dem Tisch (2) einen internen hydraulischen Kreislauf (83), eine am Tisch (2) befestigte Grundplatte (10) des Kopfes, zwei zwischen dem Schlitten (8) und der Grundplatte (10) angeordnete Laufeinheiten (10) und zwei im Schlitten (8) gelagerte und von diesem hydraulischen Kreislauf (83) betätigte Kolben (81) aufweist, welche zur Freigabe der Gleitbewegung an einer entsprechenden Vierkant-Blockierschraube (84) ziehen, die die Grundplatte (10) unter der Wirkung einer Tellerfeder (85) gegen den Schlitten (8) drückt.

3. Schleifmaschine nach Anspruch 1, wobei die Vorrichtung (13) zur Verstellung der verändlichen Verschiebungsstrecke eine Walze (15) für die Verstellung des Kopfes (5, 6) bezüglich eines Referenzpunkts des Maschinenbetts (2'), einen Schaft (16) zur Zurückhaltung des Kopfes am Maschinenbett (2') und einen an der Walze (15) befestigten Mikrounterbrecher (14) enthält, der den Schaft (16) nach einer anfänglichen gemeinsamen Bewegung des Tisches (2) und des Kopfes betätigt.

## Revendications

1. Rectifieuse à broche (4) à axe horizontal équipée d'une unité CNC, et dotée d'une poupée (5, 6) à déplacement linéaire pour la rectification des surfaces extérieures de pièces de diverses longueurs, où la table (2) de la rectifieuse est mobile par rapport au banc (2') de la machine et la poupée est coulissante par rapport à la table (2) au moyen d'un chariot (8) porte-poupée sur glissières doté d'unités de roulement (9), pour être placée à une mesure (7) déterminée en fonction de la longueur variable de la pièce, et toutes deux, la poupée (5,6) et la table (2), disposent de moyens de réglage (13, 20, 21, 31, 32) pour leur déplacement relatif automatique, caractérisé en ce que le déplacement automatique est variable et répété sur les deux courses par moyen de deux dispositifs (13, 20) pour le réglage automatique de chaque course, qui déterminera les différentes positions de la poupée par rapport à la table (2) et au banc (2') de la machine, le premier dispositif (13) comprenant un accouplement (8, 9, 10) à roulement entre le chariot (8) porte-poupée et la table (2) pourvu de moyens (81, 83, 84, 85) automatiques de blocage et de dégagement automatique du glissement de la poupée, et le second dispositif (20) réglant la course répétée comprend un cylindre (21) d'impulsion de la poupée (5,6) fixé à la table (2), une entretoise (23) parallèle au cylindre (21) et entraînée par le piston (22), deux butées mobiles (25, 25') sur cette entretoise (23) distantes entre elles en fonction de la longueur de la course, deux butées (27, 27') fixes sur la table (2) et deux capteurs (26, 26') associés à ces butées fixes (7, 27').

2. La rectifieuse de la revendication 1, où l'accouplement (6,9,10) entre le chariot (8) porte-poupée et la table (2) comprend un circuit hydraulique (83) interne, une semelle (10) de poupée fixée à la table (2), deux unités de roulement (9) interposées entre le chariot (8) et la semelle (10), deux pistons (81) logés dans le chariot (8) et actionnés par ce circuit hydraulique (8), lesquels pour dégager le glissement tirent sur une vis (84) de blocage à tête carrée qui soutient la semelle (10) contre le chariot (8) sous la force d'un ressort (85).

3. La rectifieuse de la revendication 1, où le dispositif (13) de réglage du déplacement à course variable comprend un cylindre (15) de positionnement de la poupée (5,6) par rapport à un point de référence du banc (2'9, une tige (16) de retenue de la poupée contre le banc (2') et un microrupteur (14) fixé à ce cylindre (159, qui commande la tige (16) de retenue après le déplacement initial de la table (2) et de la poupée.
